# EUROPÄISCHE PATENTSCHRIFT

(11) **EP 1 580 459 B1**
(45) Veröffentlichungstag und Bekanntmachung des Hinweises auf die Patenterteilung: **31.08.2011**
(21) Anmeldenummer: 05004989.9
(22) Anmeldetag: 08.03.2005
(51) Int. Cl.: F16H 57/02, F16H 57/08

(54) **Planetengetriebe**
Planetary gear
Transmission à engrenages planétaires

(30) Priorität: 25.03.2004 DE 102004014578
(43) Veröffentlichungstag der Anmeldung: 28.09.2005
(73) Patentinhaber: ZF Friedrichshafen AG, 88038 Friedrichshafen (DE)
(72) Erfinder: Muro, Giuseppe, 88048 Friedrichshafen (DE); Agostini, Christoph, 88045 Friedrichshafen (DE); Summer, Winfried, 88048 Tettnang-Kau (DE)

(56) Entgegenhaltungen:
- DE-A1- 10 216 137
- DE-A1- 19 954 636
- JP-A- 2001 173 670
- US-A- 4 133 586

## Beschreibung

Die Erfindung betrifft ein Planetengetriebe nach der im Oberbegriff von Anspruch 1 näher definierten Art. Ein solches Getriebe ist bekannt aus DE-A-102 16 137, die als nächstliegender Stand der Technik angesehen wird.

Planetengetriebe werden häufig als Reduktionsgetriebe oder Schaltgetriebe zum Schalten verschiedener Übersetzungen verwendet, die einen Antrieb oder Abtrieb bilden können, je nachdem, welches Teil des Planetengetriebes drehfest gehalten ist. Um bei sehr hohen Drehmomenten das Planetengetriebe mit großer Übersetzung ausführen zu können, wird das Planetenrad über eine Lagerung auf einem Planetenbolzen, welcher sich an jedem Ende im Planetenträger abstützt, gelagert. Der Planetenträger ist hierfür zweischnittig ausgebildet. Um die Axialkräfte der Planetenräder aufzunehmen, die beispielsweise durch eine Schrägverzahnung des Planetengetriebes entstehen können, wird zwischen dem Planetenrad und dem Planetenträger eine Anlaufscheibe angeordnet. Weitere Funktionen der Anlaufscheibe sind die Dämpfung von Schwingungen sowie die Zuführung von Schmieröl zu Lagern der Planetenräder durch Aussparungen in den Anlaufscheiben, Um diese Funktionen gewährleisten zu können, müssen die Anlaufscheiben gegen Verdrehen gesichert werden, beispielsweise durch Nasen an den Anlaufscheiben, die in entsprechende Nuten des Planetenträges eingreifen.

Weiterhin ist aus dem Stand der Technik bekannt, die Sicherung von Anlaufscheiben durch Werkstoffanhäufungen, wie beispielsweise Verdrehzapfen, darzustellen. Weiterhin können mehrere Anlaufscheiben miteinander verbunden werden, wodurch die relative Belastung reduziert wird und somit die Anlaufscheiben durch gegenseitiges Abstützen gegen Verdrehen gesichert werden. Um die Lebensdauer von Anlaufscheiben zu erhöhen, können Vertiefungen oder Segmentierungen in den Anlaufscheiben vorgesehen werden.

Aus der DE 199 54 636 A1 ist beispielsweise ein derartiges Planetengetriebe bekanntgeworden, das eine Anlaufscheibe aufweist, die den Axialschub eines Planetenrades aufnimmt und im elastischen Bereich so weit verformbar ist, dass die Lagerung des Planetenrades auch unter Verformung des Planetenträgers gleichmäßig belastet wird und Schwingungen im Planetengetriebe gedämpft werden.

Die aus dem Stand der Technik bekannten Anlaufscheiben in Planetengetrieben müssen aufgrund der hohen Belastungen, wie sie in Planetengetrieben häufig auftreten, sehr aufwendig gesichert werden. Dies erfordert einen hohen Bearbeitungsaufwand des Planetenträgers sowie spezielle Ausführungsformen der Anlaufscheiben. Beides führt zu hohen Kosten in Fertigung und Montage.

Der vorliegenden Erfindung liegt die Aufgabe zugrunde, ein Planetengetriebe darzustellen, bei dem einfache und damit kostengünstige Anlaufscheiben eingesetzt werden können, die eine einfache, schnelle und automatisierbare Montage ermöglichen und keine aufwendige Sicherung der Anlaufscheiben im Planetenträger erfordern, wodurch der Bearbeitungsaufwand des Planetenträgers reduziert wird.

Die der Erfindung zugrunde liegende Aufgabe wird durch ein, auch die kennzeichnenden Merkmale des Hauptanspruchs aufweisendes, gattungsgemäßes Planetengetriebe gelöst.

Ein erfindungsgemäßes Planetengetriebe beinhaltet eine Anlaufscheibe mit einer frei wählbaren, geometrischen Form, die so ausgestaltet ist, dass eine stellungs- und richtungsgebundene Montage der Anlaufscheibe erforderlich ist. Dafür werden Laschen, Nasen oder Zapfen an den Anlaufscheiben vorgesehen, die so ausgeführt sind, dass sich die Anlaufscheibe damit am Planetenträger abstützt und somit gegen Verdrehen gesichert wird. Dazu weist der Planetenträger Erhöhungen auf, an denen sich die Anlaufscheibe abstützen kann, beispielsweise in Form von Stollen mit angepreßter Form. Bei falscher Montage der Anlaufscheibe ragen die Laschen, Nasen oder Zapfen über den Planetenträger hinaus, wodurch eine Montage des Hohlrades nicht mehr möglich ist. Aus Festigkeitsgründen können die Laschen, Nasen oder Zapfen der Anlaufscheibe dicker ausgeführt sein als die Anlauffläche des Planetenrades. Der Planetenträger kann aufgrund der geometrischen Ausgestaltung der Anlaufscheibe spanlos hergestellt werden, was zu höheren Festigkeitswerten bei gleichzeitig niedrigeren Herstellkosten führt. Die Anlaufscheiben können, zusammen mit den Planetenrädern einschließlich der Planetenradlager, automatisiert montiert werden, bei gleichzeitiger Absicherung gegen fehlerhafte Montage. Durch die frei wählbare, geometrische Form kann die Montage unterstützt werden durch eine digitale Bildverarbeitung und -erkennung, da die Anlaufscheibe aufgrund ihrer geometrischen Form eindeutig identifizierbar ist.

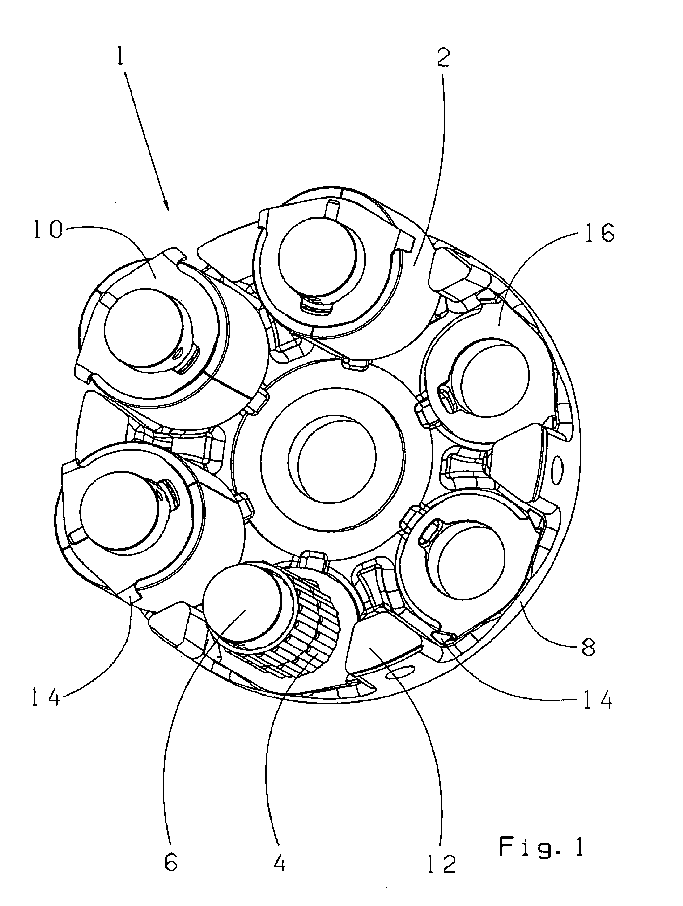

Nachfolgend wird die Erfindung anhand eines in der Figur dargestellten Ausführungsbeispiels eines erfindungsgemäßen Planetengetriebes näher erläutert.

Die einzige Figur zeigt die für die Erfindung wesentlichen Teile eines erfindungsgemäßen Planetengetriebes 1. Ein nicht dargestelltes inneres Zentralrad steht in kämmender Verbindung mit einem Planetenrad 2, welches in kämmender Verbindung mit einem nicht dargestellten Hohlrad steht. Das Planetenrad 2 ist über ein Lager 4 auf einem Planetenbolzen 6 gelagert, der an jedem Ende in einem Planetenträger 8 gehalten ist. Zwischen dem Planetenrad 2 und dem Planetenträger 8 ist eine Anlaufscheibe 10 angeordnet. Die Anlaufscheibe 10 weist eine derartige geometrische Form auf, die lediglich eine Einbaulage ermöglicht. Aus diesem Grund weist die Anlaufscheibe 10 Laschen 14 auf, die eine stellungs- und richtungsgebundene Montage erfordern. Der Planetenträger 8 weist Erhöhungen 12 in Form von Stollen auf, die als Montagehilfe, zur Montagesicherung und Verdrehsicherung der Anlaufscheibe 10 dienen. Die Laschen 14 der Anlaufscheibe 10 sind dicker ausgeführt als eine Anlauffläche 16 des Planetenrades 2.

### Bezugszeichen

- 1: Planetengetriebe
- 2: Planetenrad
- 4: Lager
- 6: Planetenbolzen
- 8: Planetenträger
- 10: Anlaufscheibe
- 12: Erhöhungen
- 14: Laschen
- 16: Anlauffläche

## Patentansprüche

1. Planetengetriebe (1), bei dem ein inneres Zentralrad mit mindestens einem Planetenrad (2) kämmt und das Planetenrad (2) seinerseits mit einem Hohlrad in kämmender Verbindung steht, wobei jedes Planetenrad (2) auf einem Planetenbolzen (6) gelagert ist, der sich auf einem Planetenträger (8) abstützt und mit mindestens einer, dem Planetenrad (2) zugeordneten Anlaufscheibe (10), die zwischen dem Planetenrad (2) und dem Planetenträger (8) angeordnet ist, wobei die Anlaufscheibe (10) eine frei wählbare, geometrische Form aufweist, die so ausgestaltet ist, dass eine stellungs- und richtungsgebundene Montage der Anlaufscheibe (10) erforderlich ist, und bei falscher Montage das Hohlrad und/oder das innere Zentralrad nicht montiert werden kann, wobei der Planetenträger (8) Erhöhungen (12) und die Anlaufscheibe (10) Laschen, Nasen oder Zapfen (14) aufweist und die Laschen, Nasen oder Zapfen (14) der Anlaufscheibe (10) derart ausgeführt sind, dass sich die Anlaufscheibe (10) damit an den Erhöhungen (12) des Planetenträgers (8) abstützt und gegen Verdrehen gesichert ist, **dadurch gekennzeichnet, dass** bei montiertem Planetengetriebe (1) die Laschen, Nasen oder Zapfen (14) der Anlaufscheibe (10) das Planetenrad (2) an dessen äußeren Umfang teilweise überlappen.

2. Planetengetriebe (1) nach Anspruch 1, **dadurch gekennzeich**n e t , dass die Laschen, Nasen oder Zapfen (14) der Anlaufscheibe (10) dicker ausgeführt sind als die Anlauffläche (16) des Planetenrades (2).

3. Planetengetriebe (1) nach Anspruch 1, **dadurch gekennzeichnet, dass** der Planetenträger (8) durch Umformen/Urformen hergestellt ist.

4. Planetengetriebe (1) nach Anspruch 1, **dadurch gekennzeich**n e t , dass der Planetenträger (8) aus Blech hergestellt ist, vorzugsweise durch Drücken, Tiefziehen, Walzen, Stanzen, Planieren oder Kalibrieren.

## Claims

1. Planetary gear set (1), in which an inner central gear meshes with at least one planet gear (2) and the planet gear (2) in turn is in meshing connection with an internal gear, wherein each planet gear (2) is mounted on a planet journal (6) which is supported on a planet carrier (8), and having at least one stop disc (10) which is assigned to the planet gear (2) and arranged between the planet gear (2) and the planet carrier (8), wherein the stop disc (10) has a freely selectable geometric form designed such that positional and directional assembly of the stop disc (10) is required, and in the case of incorrect assembly, the internal gear and/or the inner central gear cannot be assembled, wherein the planet carrier (8) has elevations (12) and the stop disc (10) has lobes, lugs or pegs (14), and the lobes, lugs or pegs (14) of the stop disc (10) are designed such that the stop disc (10) is supported via these against the elevations (12) of the planet carrier (8) and thereby secured against rotation, **characterized in that**, when the planetary gear set (1) is assembled, the lugs, lobes or pegs (14) of the stop disc (10) partially overlap the planet gear (2) at the outer circumference thereof.

2. Planetary gear set (1) according to Claim 1, **characterized in that** the lobes, lugs or pegs (14) of the stop disc (10) are formed so as to be thicker than the stop surface (16) of the planet gear (2).

3. Planetary gear set (1) according to Claim 1, **characterized in that** the planet carrier (8) is produced by deformation/primary forming.

4. Planetary gear set (1) according to Claim 1, **characterized in that** the planet carrier (8) is produced from sheet metal, preferably by pressing, deep drawing, rolling, punching, flattening or sizing.

## Revendications

1. Transmission à engrenages planétaires (1), dans laquelle une roue centrale interne s'engrène avec au moins un pignon planétaire (2) et le pignon planétaire (2) est pour sa part en liaison d'engrènement avec une couronne, chaque pignon planétaire (2) étant monté sur un boulon planétaire (6) qui s'appuie sur un porte-satellites (8) et comprenant au moins un disque de butée (10) associé au pignon planétaire (2), qui est disposé entre le pignon planétaire (2) et le porte-satellites (8), le disque de butée (10) présentant une forme géométrique pouvant être choisie librement, qui est configurée de telle sorte qu'un montage du disque de butée (10) en position et orientation correcte soit nécessaire, et en cas de montage erroné, la couronne et/ou la roue centrale interne ne peut pas être montée, le porte-satellites (8) présentant des rehaussements (12) et le disque de butée (10) des pattes, des nez ou des tourillons (14), et les pattes, nez ou tourillons (14) du disque de butée (10) étant réalisés de telle sorte que le disque de butée (10) s'appuie ainsi sur les rehaussements (12) du porte-satellites (8) et soit fixé contre toute rotation, **caractérisée en ce que** lorsque la transmission à engrenages planétaires (1) est montée, les pattes, nez ou tourillons (14) du disque de butée (10) chevauchent partiellement le pignon planétaire (2) sur sa périphérie extérieure.

2. Transmission à engrenages planétaires (1) selon la revendication 1, **caractérisée en ce que** les pattes, nez ou tourillons (14) du disque de butée (10) sont réalisés sous forme plus épaisse que la surface de butée (16) du pignon planétaire (2).

3. Transmission à engrenages planétaires (1) selon la revendication 1, **caractérisée en ce que** le porte-satellites (8) est fabriqué par façonnage ou formage primaire.

4. Transmission à engrenages planétaires (1) selon la revendication 1, **caractérisée en ce que** le porte-satellites (8) est fabriqué en tôle, de préférence par pressage, emboutissage profond, laminage, estampage, planarisation ou calibrage.
